# EUROPÄISCHE PATENTSCHRIFT

(11) **EP 1 136 526 B1**
(45) Veröffentlichungstag und Bekanntmachung des Hinweises auf die Patenterteilung: **02.01.2008**
(21) Anmeldenummer: 01103387.5
(22) Anmeldetag: 14.02.2001
(51) Int. Cl.: C09C 3/08, C09C 1/56, C08K 3/04, C08K 9/04

(54) **Russ**
Carbon black
Noir de carbone

(30) Priorität: 16.03.2000 DE 10012784
(43) Veröffentlichungstag der Anmeldung: 26.09.2001
(73) Patentinhaber: Evonik Degussa GmbH, 40474 Düsseldorf (DE)
(72) Erfinder: Bergemann, Klaus, Dr., 50170 Kerpen-Sindorf (DE); Fanghänel, Egon, Dr. Professor, 06114 Halle/S (DE); Lüthge, Thomas, 06217 Leuna (DE); Vogel, Karl, Dr., 63755 Alzenau-Michelbach (DE)

(56) Entgegenhaltungen:
- EP-A- 0 941 872
- WO-A-96/37547
- US-A- 5 159 009

## Beschreibung

Die Erfindung betrifft einen Ruß, ein Verfahren zu seiner Herstellung sowie seine Verwendung.

Es ist bekannt, Ruß mit organischen Gruppen zu versehen, indem man die organischen Gruppen mittels einer Diazoniumgruppe, die über das primäre Amin erzeugt wird, mit dem Ruß verknüpft (WO 96/18688).

Dieses bekannte Verfahren hat folgende Nachteile:
◆ Die Modifizierung mittels Diazoniumsalzen erfolgt überwiegend in wäßriger Phase. Aufgrund der hohen Verdampfungsenthalpie von Wasser ist die anschließend notwendige Trocknung mit großem Energieaufwand, also hohen Kosten verbunden.
◆ Neben dem eigentlichen Modifizierungsreagenz müssen überwiegend zusätzliche Säuren zur Einstellung des pH-Wertes eingesetzt werden. Diese Säuren werden nicht an den Ruß gebunden, sondern stellen eine Verunreinigung im Ruß dar oder müssen durch Reinigungsschritte entfernt werden.
◆ Zur Durchführung der Diazotierung ist der Einsatz von Nitrit in saurem Medium erforderlich. Dabei können sich giftige Stickstoffoxide bilden.
◆ Die ebenfalls zur Diazotierung verwendbaren nichtionischen organischen Nitrite sind teilweise giftig und leicht brennbar sind.
   Reste der Nitrite (Gegenionen, Alkylreste) verbleiben ungebunden als Verunreinigung im Ruß.

Aus Kautschuk Gummi Kunststoffe 10, 681-687 (1999) sind modifizierte Ruße bekannt, die durch radikalische Umsetzung von Fettsäuren mit Ruß unter Verwendung von DCP als Radikalbildner erhalten werden.

Ferner sind Ruße mit chemisch gebundenen funktionellen Gruppen bekannt, die hergestellt werden durch Radikalbildner, wie
- peroxidische Polymere (JP 11335603),
- azogruppenhaltige Polymere (JP 11335602),
- A1-O-O-A2 mit A1,A2=Hydrocarbyl, Aryl, Heterocyclen (JP 11335587),
- A1-OCOO-A2 (JP 11335586),
- Diacylperoxid (JP 11335601),
- Oxidation mit Peroxidicarbonatderivaten (JP 11323179),
- Azonitrilverbindungen (JP 11323176),
- Azoverbindungen (JP 11323229),
- Hydroperoxiden (JP 11323222),
- Tetraoxacyclohexan (JP 11323180),
- Verbindungen der hyposalpetrigen Säure (JP 11323178) und
- Azidverbindungen (JP 11323177).

Aus EP 0569503 ist ein Verfahren zur Oberflächenmodifizierung von kohlenstoffhaltigem Materials mit aromatischen Gruppen durch elektrochemische Reduktion eines Diazoniumsalzes bekannt.

Nachteile der Azid-, Azo- beziehungsweise Peroxidverbindungen sind die geringe Lagerstabilität, leichte Zersetzbarkeit und damit verbundene schwierige Handhabung.

Aufgabe der Erfindung ist es, einen Ruß mit organischen Gruppen zur Verfügung zu stellen, wobei der erfindungsgemäße Ruß nicht durch Säuren, Salze und ähnliche Verbindungen verunreinigt ist, der Ruß nicht mit hohem Energieaufwand getrocknet werden muß, keine giftigen Abgase bei der Modifizierung entstehen, keine oder nur geringe Mengen leicht entfernbarer Lösemittel erforderlich sind, die Modifizierung ohne Lösungsmittel möglich ist und das Modifizierungsmittel lagerstabil und eine gute Handhabbarkeit besitzt.

Gegenstand der Erfindung ist ein Ruß mit organischen Gruppen, welcher dadurch gekennzeichnet ist, daß die organischen Gruppen über mindestens eine Sulfid- und/oder Polysulfidbrücke mit dem Ruß verbunden sind und die Formel Ruß-Sₓ-R besitzen, wobei
- R=: Alkyl, durch Y funktionalisiertes Alkyl, cyclische organische Gruppen, Aryl, durch Y funktionalisiertes Aryl ArYₙ, mit n=1-5,
- Y=: -OH, -SH, -SO₃H, -SO₃M, -B(OH)₂, -O(CH₂-CH₂-O)ₙ-H,-COOH, -COOM, -NH₂, -NR²₂, -N((CH₂-CH₂-O)ₙH)₂, CON((CH₂-CH₂-O)ₙH)₂, Trialkoxysilyl, Perfluoralkyl, R², -NH₃⁺,-NR²₃⁺, -SO₂-NR²₂, -NO₂, -Cl, -CO-NR²₂, -SS-, -SCN, mit
- R²=: aliphatische Gruppe, beispielsweise Alkane, Alkene, Alkohole, Ether, Aldehyde, Ketone, Carbonsäuren oder Kohlenwasserstoffe, eine cyclische organische Gruppe, beispielsweise alicyclische Kohlenwasserstoffe, eine organische Verbindung mit einem aliphatischen und einem cyclischen Teil, die substituiert oder unsubstituiert, verzweigt oder unverzweigt, chromophore Gruppen oder Farbstoffe
und x = 1-8, vorzugsweise 1, sind.

Cyclische organische Gruppen können Cycloalkyle, Cycloalkenyle, heterocyclische Verbindungen wie zum Beispiel Pyrrolidinyl-, Pyrrolinyl-, Piperidinyl oder Morpholinyl, Arylgruppen wie zum Beispiel Phenyl, Naphthyl oder Anthracenyl, sowie Heteroarylgruppen wie zum Beispiel Imidazolyl, Pyrazolyl, Pyridinyl, Thienyl, Thiazolyl, Furyl oder Indolyl, sein.

In einer bevorzugten Ausführungsform kann die organische Gruppe kein Silizium enthalten.

Als Ruß können Furnaceruß, Gasruß, Channelruß, Flammruß, Thermalruß, Acetylenruß, Plasmaruß, Inversionsruße, bekannt aus DE 195 21 565, Si-haltige Ruße, bekannt aus WO 98/45361 oder DE 19613796, oder metallhaltige Ruße, bekannt aus WO 98/42778, Lichtbogenruß und Ruße, die Nebenprodukte chemischer Produktionsprozesse sind, verwendet werden. Der Ruß kann durch vorgelagerte Reaktionen aktiviert werden.

Es können Ruße, die als Verstärkerfüllstoff in Kautschukmischungen verwendet werden, eingesetzt werden.

Es können Farbruße eingesetzt werden.

Weitere Ruße können sein: Leitfähigkeitsruß, Ruß zur UV-Stabilisierung, Ruß als Füllstoff in anderen Systemem als Kautschuk, wie zum Beispiel in Bitumen, Kunststoff, Ruß als Reduktionsmittel, in der Metallurgie.

Die primär aufgebrachten Gruppen können durch Folgereaktionen weiter modifiziert werden.

Ein weiterer Gegenstand der Erfindung ist ein Verfahren zur Herstellung des erfindungsgemäßen Rußes, welches dadurch gekennzeichnet ist, daß man Ruß und Verbindungen der allgemeinen Formel R-S_{y}-R, wobei y = 2-10, R die oben angeführte Bedeutung hat und R gleich oder verschieden sein kann, bei Temperaturen von 150°-300°C umsetzt.

Als Verbindungen der allgemeinen Formel R-S_{y}-R können Verbindungen eingesetzt werden, die radikalisch spaltbare Bindungen aufweisen.

Die Gruppen R können dabei auf die potentiellen Anwendungsgebiete maßgeschneidert werden, da das gefundene Reaktionsprinzip sowohl die Einführung von hydrophilen, wie auch von lipophilen Resten gestattet.
Die Reste können auch ionisch, polymer oder für weitere Reaktionen reaktiv sein.

In einer bevorzugten Ausführungsform kann die organische Gruppe R kein Silizium enthalten.

Die Verbindung mit der der allgemeinen Formel R-S_{y}-R kann auf den Ruß aufgebracht werden durch Einmischen oder Aufsprühen. Die Verbindung mit der allgemeinen Formel R-S_{y}-R kann als Pulver, Schmelze oder Lösung aufgebracht werden. Besonders vorteilhaft kann die Aufbringung der Verbindung während der Rußherstellung sein, wobei die Zugabe der Verbindung an einem Ort erfolgt, der die notwendige Temperatur aufweist.

Die Reaktion zur Modifizierung des Rußes kann vorzugsweise lösungsmittelfrei oder in einem Lösungsmittel, vorzugsweise leicht flüchtigen organischen Lösungsmittel, durchgeführt werden.

Die Reaktion zur Modifizierung des Rußes kann durch Temperung erfolgen.

Die Reaktion zur Modifizierung des Rußes kann bei Temperaturen von 150°-300°C, vorzugsweise 150°-250°C durchgeführt werden.

Die erfindungsgemäßen Ruße mit organischen Gruppen können sowohl als Füllstoff, Verstärkerfüllstoff, UV-Stabilisator, Leitfähigkeitsruß, als auch als Pigment in Kautschuk, Kunststoff, Druckfarben, Tinten, Inkjet-Tinten, Lacken, Farben, Bitumen, Beton, anderen Baustoffen und Papier eingesetzt werden. Ferner kann der erfindungsgemäße Ruß als Reduktionsmittel in der Metallurgie verwendet werden.

Die erfindungsgemäßen Ruße weisen den Vorteil auf, daß
- polar modifizierte Ruße (zum Beispiel mit -SO₃- Gruppen) besser in polaren Systemen, vorrangig Wasser, dispergierbar sind,
- unpolar modifizierte Ruße (zum Beispiel mit Alkylgruppen) besser in unpolaren Systemen, wie zum Beispiel Ölen, zu dispergieren sind,
- geeignet modifizierte Ruße mit polaren oder sterischsperrigen Gruppen, in den Systemen elektrostatisch, beziehungsweise sterisch stabilisiert werden,
- modifizierte Ruße, besser in Dispersionen stabilisiert sind und bessere koloristische Eigenschaften wie Farbtiefe und Blaustichigkeit aufweisen,
- Ruße mit weiterhin reaktiven Substituenten zur Kopplung und Vernetzung in Systemen (zum Beispiel Kautschuk), genutzt werden können,
- reaktiv modifizierte Ruße eine Anbindung des Rußes an das Polymer ermöglichen.

Vorteile des erfindungsgemäßen Verfahrens sind die guten Lagerstabilitäten der Ausgangsverbindungen und deren einfache Handhabung.

Die erfindungsgemäßen Ruße können dabei arm an Nebenprodukten, Salzen, Säuren und Feuchtigkeit hergestellt werden.

### Beispiel:

20 g des Disulfids gemäß Formel I 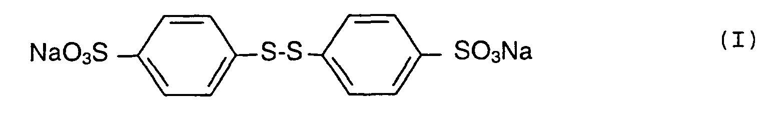 werden feinverteilt als wäßrige Lösung auf 100 g Farbruß FW 1 aufgebracht und das Lösungsmittel entfernt. Die anschließende Festkörperreaktion wird fünf Stunden bei 180°C beziehungsweise 250°C Ofentemperatur durchgeführt. Die Ausbeute beträgt 90 % (bei 180°C) und 95% (bei 250°C).

Der Farbruß FW 1 ist ein Handelsprodukt der Firma Degussa-Hüls.

## Patentansprüche

1. Ruß mit organischen Gruppen, **dadurch gekennzeichnet, daß** die organischen Gruppen über mindestens eine Sulfid- und/oder Polysulfidbrücke mit dem Ruß verbunden sind und diese die Formel Ruß-Sₓ-R besitzen, wobei
R= Alkyl, durch Y funktionalisiertes Alkyl, cyclische organische Gruppen, Aryl, durch Y funktionalisiertes Aryl ArYₙ, mit n=1-5,
Y=-OH, -SH, -SO₃H, -SO₃M, -B(OH)₂, -O(CH₂-CH₂-O)ₙ-H,-COOH, -COOM, -NH₂, -NR²₂, -N((CH₂-CH₂-O)ₙH)₂, CON((CH₂-CH₂-O)ₙH)₂, Trialkoxysilyl, Perfluoralkyl, R², -NH₃⁺, -NR²₃⁺, - SO₂-NR²₂, -NO₂, -Cl, -CO-NR²₂, -SS-, -SCN, mit
R²= aliphatische Gruppe, eine cyclische organische Gruppe, eine organische Verbindung mit einem aliphatischen und einem cyclischen Teil, die substituiert oder unsubstituiert, verzweigt oder unverzweigt, chromophore Gruppen oder Farbstoffe,
und x=1-8 sind.

2. Verfahren zur Herstellung des Rußes nach Anspruch 1, **dadurch gekennzeichnet, daß** man Ruß und Verbindungen der allgemeinen Formel R-S_{y}-R, wobei y = 2-10 und R die oben angeführte Bedeutung hat, und R gleich oder verschieden sein kann, bei Temperaturen von 150°-300°C umsetzt.

3. Verfahren zur Herstellung des Rußes nach Anspruch 2, **dadurch gekennzeichnet, daß** man die Modifizierung in einem Lösungsmittel oder ohne Lösungsmittel durchführt.

4. Verwendung des Rußes nach Anspruch 1 als Füllstoffe, Verstärkerfüllstoff, Leitfähigkeitsruß, Pigment und UV-Stabilisator in Kautschuk, Tinten, Farben, Inkjet-Tinten, Druckfarben, Lacken, Beton, Kunststoffen, Baustoffen, Papier und Bitumen.

## Claims

1. Carbon black having organic groups, **characterized in that** the organic groups are attached to the carbon black via one or more sulphide and/or polysulphide bridges and have the formula carbon black-Sₓ-R, in which
R = alkyl, Y-functionalized alkyl, cyclic organic groups, aryl, Y-functionalized aryl ArYₙ, where n = 1-5,
Y = -OH, -SH, -SO₃H, -SO₃M, -B(OH)₂, -O(CH₂-CH₂-O)ₙ-H, -COOH, -COOM, -NH₂, -NR²₂, -N ((CH₂-CH₂-O)ₙH)₂, CON((CH₂-CH₂-O)ₙH)₂, trialkoxysilyl, perfluoroalkyl, R², -NH₃⁺, -NR²₃⁺, -SO₂-NR²₂, -NO₂, -Cl, -CO-NR²₂, -SS-, -SCN, where
R² = aliphatic group, a cyclic organic group, an organic compound having an aliphatic part and a cyclic part which are substituted or unsubstituted, branched or unbranched, chromo-phoric groups or dyes,
and x = 1-8.

2. Method of producing the carbon black according to Claim 1, **characterized in that** carbon black and compounds of the general formula R-S_{y}-R, in which y = 2-10 and R is as defined above, and each R can be the same or different, are reacted at temperatures of from 150°-300°C.

3. Method of producing carbon black according to Claim 2, **characterized in that** the modification is carried out in a solvent or without solvent.

4. Use of the carbon black according to Claim 1 as fillers, reinforcing filler, conductivity black, pigment and UV stabilizer in rubber, liquid inks, paints, inkjet inks, printing inks, coatings, concrete, plastics, construction materials, paper and bitumen.

## Revendications

1. Suie avec des groupes organiques, **caractérisée en ce que** les groupes organiques sont liés à la suie via au moins un pont sulfure et/ou polysulfure et présentant la formule suie-Sₓ-R, où
R = alkyle, alkyle fonctionnalisé par Y, groupes organiques cycliques, aryle, aryle fonctionnalisé par Y ArYₙ, avec n=1-5,
Y = -OH, -SH, -SO₃H, -SO₃M, -B(OH)₂, -O(CH₂-CH₂-O)ₙ-H, -COOH, -COOM, -NH₂, -NR²₂, -N ((CH₂-CH₂-O)ₙH)₂, CON(CH₂-CH₂-O)ₙH)₂, trialcoxysilyle, perfluoroalkyle, R², -NH₃⁺, -NR²₃⁺, -SO₂-NR²₂, -NO₂, -Cl, -CO-NR²₂, -SS-, -SCN,
avec R² = groupe aliphatique, un groupe organique cyclique, un composé organique avec une partie aliphatique et une partie cyclique, substitués ou non substitués, ramifiés ou non ramifiés, des groupes chromophores ou des colorants,
et x = 1-8.

2. Procédé pour la production de la suie selon la revendication 1, **caractérisée en ce qu'**on transforme la suie et les composés de formule générale R-S_{y}-R, où y = 2-10 et R a la signification indiquée ci-dessus et R peut être identique ou différent à des températures de 150°C-300°C.

3. Procédé pour la production de la suie selon la revendication 2, **caractérisée en ce qu'**on réalise la modification dans un solvant ou sans solvant.

4. Utilisation de la suie selon la revendication 1 comme charges, charge de renforcement, suie conductible, pigment et stabilisateur aux UV dans le caoutchouc, les encres, les peintures, les encres à jet d'encre, les encres d'imprimerie, les laques, le béton, les matériaux synthétiques, les matériaux de construction, le papier et les bitumes.
